# FASCICULE DE BREVET EUROPEEN

(11) **EP 1 995 111 B1**
(45) Date de publication et mention de la délivrance du brevet: **25.08.2010**
(21) Numéro de dépôt: 08290462.4
(22) Date de dépôt: 19.05.2008
(51) Int. Cl.: B60N 2/16, B60N 2/24, B60N 2/42, F41H 7/02

(54) **Nacelle pour siège de véhicule militaire**
Hängegerüst für einen miIitärischen Fahrzeugsitz
Cradle for the seat of a military vehicle

(30) Priorité: 23.05.2007 FR 0703644
(43) Date de publication de la demande: 26.11.2008
(73) Titulaire: NEXTER Systems, 42328 Roanne (FR)
(72) Inventeur: David, Jean-Luc, 92350 Le Plessis Robinson (FR); Garnier, Michel, 78280 Guyancourt (FR); Timmer, Bernard, 78700 Conflans Saint-Honorine (FR)
(74) Mandataire: Célanie, Christian

(56) Documents cités:
- EP-A- 1 293 378
- EP-A- 1 361 104
- DE-A1- 1 630 402
- FR-A- 2 885 854

## Description

Le secteur technique de la présente invention est celui des sièges pour véhicules et plus particulièrement des structures porteuses de siège pour véhicules militaires.

Dans certaines conditions, les véhicules militaires sont exposés à des agressions du type mines. Ces mines explosent généralement sous le véhicule. Il est donc impératif d'isoler les occupants du véhicule du plancher du véhicule. Une solution consiste à isoler le siège du plancher au moyen d'un dispositif à suspension. Cependant, dans certains cas (par exemple pour les conducteurs ou les chefs d'unité), on souhaite pouvoir régler le siège à différentes hauteurs, selon si l'on souhaite être totalement dans le véhicule ou si l'on souhaite maintenir la tête en dehors du véhicule. Cela rend le dispositif de réglage particulièrement encombrant lorsqu'il est couplé à un système de suspension. A ces contraintes s'ajoutent des considérations ergonomiques et fonctionnelles: les sièges doivent pouvoir être réglés en fonction de la taille de l'utilisateur et l'utilisateur doit avoir accès à différentes interfaces (écrans de contrôle, commandes du véhicule, commandes de tir,...) qui doivent être correctement disposées quelle que soit la position du siège.

On cherche donc une autre solution pour résoudre le problème de l'isolation du siège par rapport au plancher du véhicule. Ainsi, le brevet EP1293378 décrit un véhicule militaire comportant un siège solidaire d'une armature fixée au toit et/ou aux parois latérales ou frontales du véhicule, correspondant au préambule de la revendication 1. La position du siège est réglable en faisant coulisser le siège le long de l'armature. Cette réalisation présente cependant l'inconvénient d'être limitée du point de vue des capacités de mouvement. En effet, la variation de la hauteur du siège est proportionnelle à la variation de son positionnement longitudinal. La cinématique du siège occupe donc un volume important à l'intérieur du véhicule et le changement de position du siège est long et fastidieux. Par ailleurs, ce mécanisme ne prévoit aucune solution au problème de positionnement des interfaces lors des mouvements du siège.

Le brevet DE-1630402 décrit un siège réglable en hauteur par l'intermédiaire d'un bras articulé par rapport au toit du véhicule autour d'une chape et d'un vérin actionnant ce bras. Le vérin est fixé au plancher du véhicule par l'intermédiaire d'un socle. En d'autres termes, le siège décrit dans ce document est relié au plancher et n'est pas isolé par rapport à celui-ci.

Le but de la présente invention est de fournir une structure porteuse d'un siège de véhicule militaire permettant de remédier à ces inconvénients.

Un autre but de l'invention est de fournir une structure porteuse d'un siège de véhicule militaire couplée avec l'ouvrant situé au dessus du siège afin de lier l'ouverture de l'ouvrant au déplacement du siège vers le haut (et réciproquement, lier la fermeture de l'ouvrant au déplacement du siège vers le bas).

L'invention a donc pour objet une structure porteuse pour siège de véhicule permettant d'isoler le siège du plancher du véhicule par l'intermédiaire d'une armature fixée aux parois latérales et/ou au toit du véhicule, comportant une nacelle articulée par rapport à l'armature et supportant un siège et au moins un support pour interface de commande et/ou pour interface homme/machine, **caractérisée en ce que** la nacelle est reliée à l'armature au moyen d'une liaison pivot et d'un vérin interposé entre l'armature et la nacelle pour commander le basculement de la nacelle par rapport à l'armature autour du pivot.

Les caractéristiques complémentaires énumérées ci-après font l'objet des revendications dépendantes.

Selon une caractéristique de l'invention, le siège est réglable en position par rapport à la nacelle.

Selon une autre caractéristique de l'invention, le ou les support(s) est (sont) réglable(s) en position par rapport à la nacelle.

Selon encore une autre caractéristique de l'invention, la nacelle comporte au moins un profilé de guidage le long duquel au moins un support est déplaçable.

Selon une autre caractéristique de l'invention, chaque interface est réglable par rapport à son support.

Selon une autre caractéristique de l'invention, la structure comporte un organe de couplage articulé entre la nacelle et une interface homme/machine non supportée par la nacelle, permettant de coupler l'orientation de ladite interface au déplacement de la nacelle.

Selon une autre caractéristique de l'invention, l'organe de couplage se présente sous la forme d'une biellette disposée entre un support pour interface de commande et l'interface homme/machine non supportée par la nacelle.

Selon une autre caractéristique de l'invention, la structure est destinée à être disposé sous un ouvrant et la nacelle comporte un moyen d'ouverture/fermeture coopérant avec l'ouvrant afin de l'ouvrir ou de le fermer lors de la montée ou de la descente de la nacelle.

Selon une autre caractéristique de l'invention, le moyen d'ouverture/fermeture se présente sous la forme de galets supportés par la nacelle et coopérant avec au moins une bande de roulement solidaire de l'ouvrant.

Selon une autre caractéristique de l'invention, la structure comporte un moyen de blocage permettant le blocage en position du galet lorsque l'ouvrant est en position ouverte.

Selon une autre caractéristique de l'invention, la structure comporte un système de désolidarisation permettant la séparation du moyen de blocage et du galet afin de permettre l'ouverture complète de l'ouvrant.

Un tout premier avantage de la structure selon l'invention réside dans sa compacité.

Un autre avantage réside dans le fait qu'elle permet le déplacement du siège tout en conservant les réglages des interfaces.

Un autre avantage réside dans le couplage entre la structure porteuse et l'ouverture de l'ouvrant associé au siège.

D'autres caractéristiques, détails et avantages de l'invention ressortiront plus clairement de la description donnée ci-après à titre indicatif en relation avec des dessins dans lesquels :
- la figure 1 représente une vue en perspective une structure porteuse selon l'invention,
- les figures 2a et 2b illustrent l'utilisation de la structure selon deux positions différentes,
- la figure 3 illustre la relation entre la structure et l'ouvrant, et
- les figures 4a et 4b illustrent une variante de réalisation de l'invention.

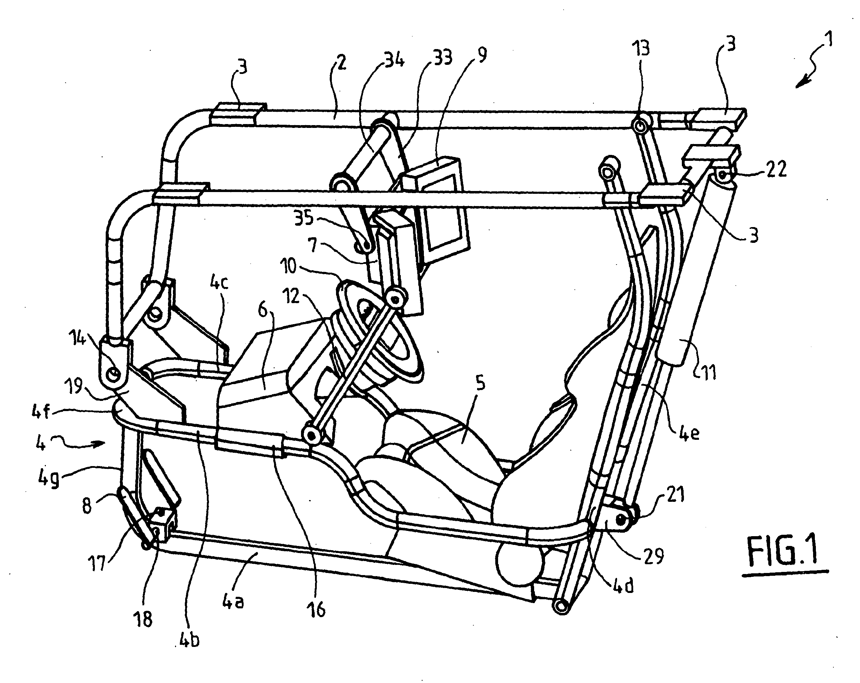

La figure 1 illustre un premier mode de réalisation de l'invention. Dans ce mode de réalisation, la structure porteuse 1 pour siège de véhicule comporte une armature 2 destinée à être fixée au toit du véhicule (non représenté) par l'intermédiaire de moyens de fixation 3 (ici des pattes vissées ou soudées au toit), une nacelle 4 montée articulée sur l'armature 2 et un siège 5 fixé sur la nacelle. La nacelle 4 comporte également des supports (ou "moyens de réception") 6 et 18 destinés à recevoir des interfaces de commande 8 et 10 et/ou des interfaces homme/machine.

Dans cet exemple de réalisation, la nacelle 4 est réalisée par des profilés référencés 4a à 4g. Ces profilés sont par exemple tubulaires. Un premier profilé 4a (ou profilé inférieur) constitue la partie inférieure de la nacelle. Ce profilé inférieur 4a supporte le siège 5 et le support 18 de pédales portant les pédales 8. Les pédales 8 constituent des interfaces de commande et sont, par exemple, des pédales de freinage et d'accélération, ou des pédales de commandes des chenilles droite et gauche pour un véhicule chenillé.

Le siège 5 et le support 18 sont réglables en position par rapport au profilé inférieur 4a de la nacelle 4. Pour cela, on pourra prévoir des formes complémentaires entre le profilé 4a et le siège 5 et le support 18 (par exemple queues d'aronde, languette/rainure, arbre/alésage,...). Le profilé inférieur 4a constitue ainsi un profilé de guidage le long duquel le support 18 et le siège 5 sont déplaçables. Le support 18 comporte un organe de verrouillage 17 permettant de verrouiller le support 18 sur le profilé 4a lorsqu'il a été déplacé à la position adéquate. Le siège 5 comporte également un ou plusieurs organes de verrouillage en position (non représentés).

La nacelle 4 comporte encore des profilés latéraux parallèles 4b et 4c. Ces profilés 4b et 4c assurent la rigidification de la nacelle 4 et constituent des profilés de guidage le long desquels le support 6 est déplaçable et réglable en position par rapport à la nacelle 4. Le support 6 est ici représenté portant une interface de commande constituée par le volant 10, mais on pourra également réaliser l'invention en remplaçant ou en complétant le volant 10 par une interface homme/machine (par exemple un écran tactile).

Les profilés 4a, 4b et 4c sont reliés entre eux par une poutre avant 4g et un arceau 4f. L'arceau 4f porte des flasques avant 19 permettant de relier la nacelle 4 à l'armature 2, au moyen d'une liaison pivot 14.

Enfin, la nacelle 4 comporte deux profilés arrières 4d et 4e, sensiblement verticaux, dont l'extrémité supérieure porte un galet 13 dont la fonction sera décrite par la suite. Des flasques arrières 20 sont disposés et fixés entre les profilés 4d et 4e. Un vérin 11 est articulé au niveau des flasques arrières 20 par un pivot 21. L'autre extrémité du vérin 11 est articulée à l'armature 2 par un pivot 22.

Ainsi la commande du vérin aura pour effet de rapprocher ou éloigner l'un de l'autre les pivots 21 et 22. Ce mouvement fera donc basculer la nacelle 4 par rapport à l'armature 2 autour du pivot 14.

On remarquera par ailleurs que dans ce mode de réalisation, un support 7 portant une interface homme/machine 9 est fixé sur l'armature 2 par l'intermédiaire de bras 33 fixés à un arbre 34. Le support 7 est articulé par rapport aux bras 33 au niveau d'un axe 35. Un organe de couplage 12 est articulé entre la nacelle 4 et l'interface homme/machine 9 afin de coupler l'orientation de ladite interface 9 au déplacement de la nacelle 4, comme il sera décrit par la suite. Cet organe de couplage se présente sous la forme d'une biellette 12 disposée entre le support 6 pour interface de commande et l'interface homme/machine 9.

La longueur de la biellette 12 sera de préférence réglable pour s'adapter aux besoins de l'opérateur.

Sur cet exemple de réalisation de l'invention, on a représenté et défini les moyens de fixation 3 de l'armature 2 comme destinés à fixer l'armature 2 au toit du véhicule, mais cet exemple a été donné à titre illustratif et non limitatif. On pourra par exemple équiper la structure selon l'invention de moyens de fixation 3 de l'armature 2 sur les parois latérales du véhicule.

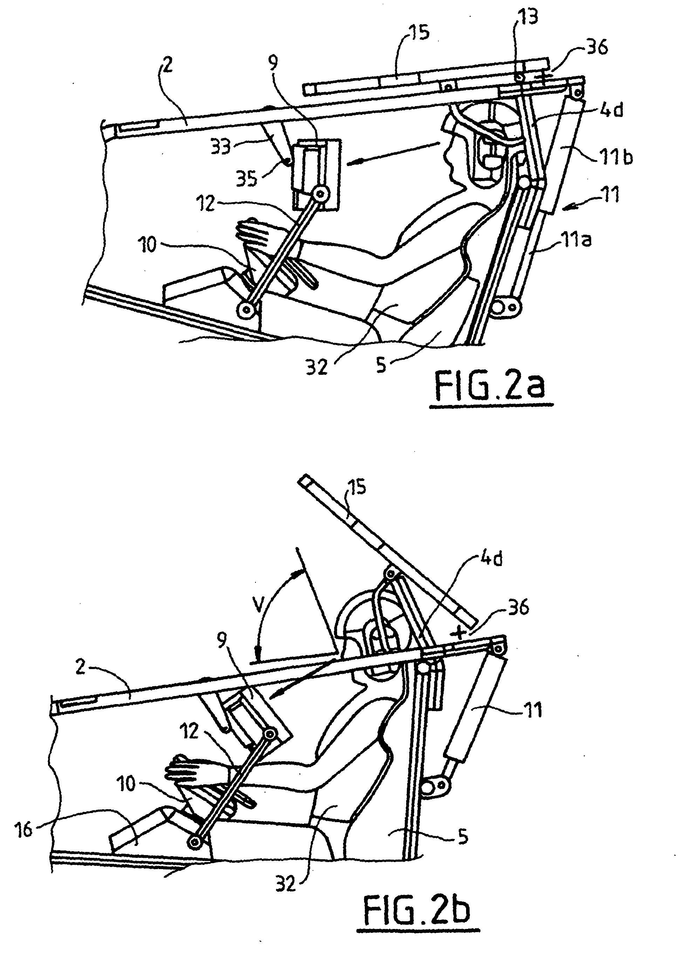

Les figures 2a et 2b sont des vues de profil illustrant l'utilisation selon deux positions différentes de la structure précédemment décrite.

La figure 2a représente une structure selon l'invention où l'utilisateur et la nacelle sont dans une position "tête rentrée". Dans cette configuration, un utilisateur 32 est installé dans le siège 5, sous un ouvrant 15. L'utilisateur a réglé la position du siège 5, du volant 10, des pédales (non représentées) et de l'interface homme/machine 9 (ou écran). Il bénéficie donc d'une vision directe sur l'écran 9 et est installé, légèrement allongé dans une position ergonomique. L'ouvrant 15 est fermé et les galets 13 des profilés 4d et 4e (non visibles sur la figure) sont en appui contre l'ouvrant 15. La tige 11a du vérin 11 est sortie du corps de vérin 11b pour maintenir la nacelle en position "tête rentrée".

L'ouvrant 15 est articulé par rapport au toit du véhicule (non représenté) au niveau d'une articulation 36 (localisée schématiquement sur les figures). Cette articulation est disposée au voisinage du bord arrière de l'ouvrant 15.

La figure 2b représente la même structure que celle de la figure précédente mais où l'utilisateur et la nacelle sont dans une position "tête sortie". Pour passer de la position précédente à celle-ci, le vérin 11 a rentré sa tige, ce qui a entraîné une rotation de la nacelle 4 autour de son pivot 14 (visible sur la figure 1) et a soulevé la nacelle 4. Le siège 5, le volant 10 et les pédales 8 (non représentées) sont solidaires de la nacelle et ils se sont par conséquent déplacés avec la nacelle mais sont toujours à même distance les uns des autres. L'utilisateur 32 n'a donc pas à les régler à nouveau en position. La biellette 12 est fixée à une extrémité au support 16, le déplacement de la nacelle 4 a donc entraîné le déplacement de la biellette 12, ce qui a provoqué la rotation de l'écran 9 par rapport à l'axe 35. Ainsi, l'utilisateur 32 bénéficie d'une vision extérieure selon un champ de vision V tout en conservant une vue directe sur l'écran 9.

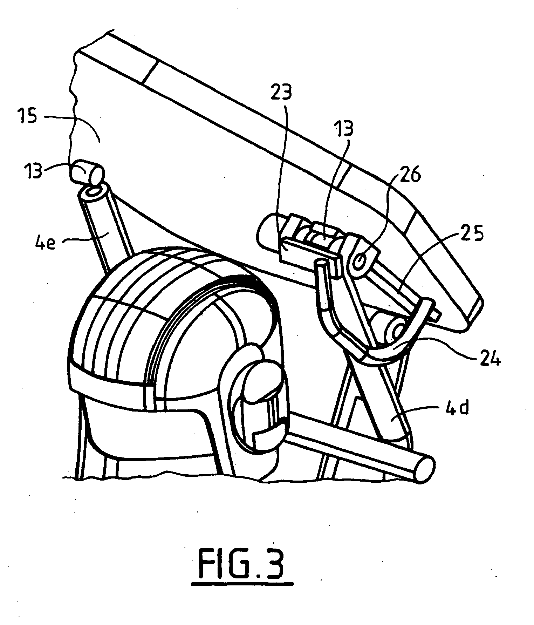

On remarquera par ailleurs que le déplacement des profilés 4d et 4e (dont un seul est visible) a entraîné l'ouverture de l'ouvrant 15 comme il sera décrit par la suite en relation avec la figure 3.

La figure 3 est une vue en perspective représentant la structure précédemment décrite, dans la position "tête sortie" et illustrant plus particulièrement le système d'ouverture de l'ouvrant 15. On peut notamment distinguer sur cette figure que les galets 13 disposés aux extrémités des profilés 4d,4e roulent chacun sur une bande de roulement 25 solidaire de l'ouvrant 15 (dont une seule est représentée). En fin de course (tel que représenté par la figure 3), le galet 13 est coincé par pincement entre la bande de roulement 25 et un patin 23 afin d'empêcher le battement de l'ouvrant. Le patin 23 est solidaire d'une poignée 24 articulée sur l'ouvrant 15 par un pivot 26. On pourrait éventuellement prévoir deux patins 23, un par galet 13.

Le fonctionnement est le suivant: l'ouvrant 15 est, comme précisé précédemment, articulé par rapport au toit du véhicule au niveau du pivot 36. Lors de la montée de la nacelle, les profilés 4d et 4e exercent un effort vertical vers le haut sur l'ouvrant 15, ce qui entraîne sa rotation et son ouverture. Les galets 13 roulent sur leurs bandes de roulement 25, jusqu'à être coincés par pincement entre le patin 23 et leur bande de roulement 25 (comme illustré sur la figure 3) pour maintenir ainsi l'ouvrant 15 en position ouverte.

La structure est réalisée de manière à ce que la fin de course de la nacelle coïncide avec la fin de course des galets 13 et la position ouverte de l'ouvrant 15.

De plus, afin de permettre une ouverture totale de l'ouvrant 15, un système de désolidarisation est prévu. Ce système est réalisé par la poignée 24 supportant le patin 23 et solidaire de l'ouvrant 15 au moyen de la liaison pivot 26. La manoeuvre de la poignée 24 entraîne l'éloignement du patin 23 du galet 13. L'ouvrant peut alors être complètement ouvert.

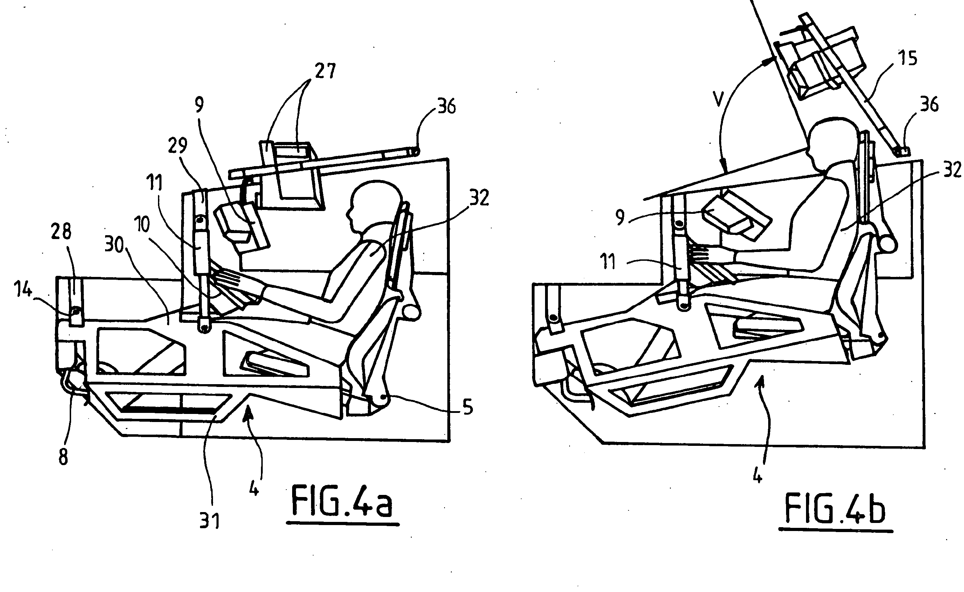

Les figures 4a et 4b illustrent une variante de réalisation de l'invention. Dans cette variante de réalisation, l'armature fixée aux parois et/ou au toit du véhicule est constituée par des pattes 28 et 29 respectivement solidaires d'une paroi supérieure et du toit du véhicule. De plus, la nacelle 4 n'est pas réalisée par des éléments tubulaires mais par une base 31 surmontée de plaques verticales 30. Par ailleurs, le vérin 11 n'est pas disposé à l'arrière du siège 5 mais à une position intermédiaire entre le siège 5 et la liaison pivot 14 située à l'avant de la nacelle 4. Le principe de l'invention est identique au mode de réalisation précédent: le siège 5 et les interfaces 8 et 10 sont supportés et réglables en position par rapport à la nacelle 4.

La figure 4a illustre la structure selon l'invention où l'utilisateur 32 et la nacelle 4 sont dans une position "tête rentrée". Dans cette position, l'utilisateur 32 peut visionner son environnement et les informations au moyen d'un écran 9 et d'épiscopes 27 et a accès aux commandes 8 et 10.

La figure 4b illustre la structure selon l'invention où l'utilisateur 32 et la nacelle 4 sont dans une position "tête sortie". Dans cette position, l'ouvrant 15 est ouvert, par exemple à l'aide d'un mécanisme analogue à celui décrit précédemment. L'utilisateur 32 peut visionner les informations au moyen de l'écran 9 et son environnement selon un champ de vision V. Sans réglage, l'utilisateur a accès aux commandes 8 et 10. Dans ce mode de réalisation, l'écran 9 n'est pas relié à la nacelle, son orientation est donc réalisée manuellement.

## Revendications

1. Structure porteuse pour siège de véhicule permettant d'isoler le siège (5) du plancher du véhicule par l'intermédiaire d'une armature (2;28,29) fixée aux parois latérales et/ou au toit du véhicule, comportant une nacelle (4) articulée par rapport à l'armature et supportant un siège (5) et au moins un support (6;18) pour interface de commande (10;8) et/ou pour interface homme/machine, **caractérisée en ce que** la nacelle (4) est reliée à l'armature (2;28,29) au moyen d'une liaison pivot (14) et d'un vérin (11) interposé entre l'armature (2, 28, 29) et la nacelle (4) pour commander le basculement de la nacelle par rapport à l'armature autour du pivot (14).

2. Structure selon la revendication 1, **caractérisée en ce que** le siège (5) est réglable en position par rapport à la nacelle (4).

3. Structure selon la revendication 1 ou 2, **caractérisée en ce que** le (ou les) support(s) (6;18) est (sont) réglable(s) en position par rapport à la nacelle (4).

4. Structure selon la revendication 3, **caractérisée en ce que** la nacelle (4) comporte au moins un profilé de guidage (4a;4b;4c) le long duquel au moins un support (6;18) est déplaçable.

5. Structure selon la revendication 3 ou 4, **caractérisée en ce que** chaque interface (10;8) est réglable par rapport à son support (6;18).

6. Structure selon l'une des revendications 1 à 5 **caractérisée en ce qu'**elle comporte un organe de couplage (12) articulé entre la nacelle (4) et une interface homme/machine (9) non supportée par la nacelle, permettant de coupler l'orientation de ladite interface (9) au déplacement de la nacelle (4).

7. Structure selon la revendication 6, **caractérisée en ce que** l'organe de couplage (12) se présente sous la forme d'une biellette (12) disposée entre un support (6;18) pour interface de commande et l'interface homme/machine (9) non supportée par la nacelle.

8. Structure selon l'une des revendications 1 à 7 et destinée à être disposé sous un ouvrant (15), structure **caractérisée en ce que** la nacelle (4) comporte un moyen d'ouverture/fermeture coopérant avec l'ouvrant (15) afin de l'ouvrir ou de le fermer lors de la montée ou de la descente de la nacelle (4).

9. Structure selon la revendication 8, **caractérisée en ce que** le moyen d'ouverture/fermeture se présente sous la forme de galets (13) supportés par la nacelle (4) et coopérant avec au moins une bande de roulement (25) solidaire de l'ouvrant (15).

10. Structure selon la revendication 9, **caractérisée en ce qu'**elle comporte un moyen de blocage (23) permettant le blocage en position du galet (13) lorsque l'ouvrant (15) est en position ouverte.

11. Structure selon la revendication 10, **caractérisée en ce qu'**elle comporte un système de désolidarisation (24) permettant la séparation du moyen de blocage (23) et du galet (13) afin de permettre l'ouverture complète de l'ouvrant (15).

## Claims

1. A support structure for the seat of a vehicle that enables the seat (5) to be isolated from the vehicle floor by means of a frame (2; 28, 29) fixed to the side panels and/or roof of the vehicle, that incorporates a lift cage (4) hinged with respect to the frame and supporting a seat (5) and at least one support (6; 18) for a control interface (10; 8) and/or man/machine interface, **characterised in that** the lift cage (4) is linked to the frame (2; 28, 29) by means of a pivot link (14) and a jack (11) positioned between the frame (2; 28, 29) and the lift cage (4) so control the tilting of the lift cage with respect to the frame around the pivot (14).

2. A structure according to Claim 1, **characterised in that** the seat (5) is adjustable in height with respect to the lift cage (4).

3. A structure according to Claims 1 or 2, **characterised in that** the support(s) (6; 18) is (are) adjustable in position with respect to the lift cage (4).

4. A structure according to Claim 3, **characterised in that** the lift cage (4) incorporates at least one guiding section (4a; 4b; 4c) along which at least one support (6; 18) can be displaced.

5. A structure according to Claims 3 or 4, **characterised in that** each interface (10; 8) can be adjusted with respect to its support (6; 18).

6. A structure according to one of Claims 1 to 5, **characterised in that** it incorporates a coupling organ (12) hinged between the lift cage (4) and a man/machine interface (9) that is not supported by the lift cage, enabling the orientation of said interface (9) to be coupled with the displacement of the lift cage (4).

7. A structure according to Claim 6, **characterised in that** the coupling organ (12) is in the form of a slave connecting rod (12) positioned between a support (6; 18) for the control interface and the man/machine interface (9) unsupported by the lift cage.

8. A structure according to one of Claims 1 to 7 and intended to be positioned under a hatch (15), **characterised in that** the lift cage(4) incorporates opening/closing means that cooperate with the hatch (15) so as to open or close it during the raising or lowering of the lift cage (4).

9. A structure according to Claim 8, **characterised in that** the opening/closing means are in the form of rollers (13) supported by the lift cage (4) and cooperating with at least one roll band (25) integral with the hatch (15).

10. A structure according to Claim 9, **characterised in that** it incorporates blocking means (23) enabling the position of the roller (13) to be blocked when the hatch (15) is in the open position.

11. A structure according to Claim 10, **characterised in that** it incorporates a disconnecting system (24) enabling the blocking means (23) to be disconnected from the roller (13) so as to enable the hatch (15) to be fully opened.

## Patentansprüche

1. Tragende Struktur für Fahrzeugsitz, die es ermöglicht, den Sitz (5) vom Fußboden des Fahrzeugs mit Hilfe einer Bewehrung (2; 28, 29) zu isolieren, die an den seitlichen Wänden und / oder am Dach des Fahrzeuges befestigt ist, umfassend ein Gerüst (4), das in Bezug auf die Bewehrung angelenkt ist und einen Sitz (5) trägt, und wenigstens eine Halterung (6; 18) für eine Steuerschnittstelle (10; 8) und / oder für eine Schnittstelle Mensch/Maschine, **dadurch gekennzeichnet, dass** das Gerüst (4) mit der Bewehrung (2; 28, 29) mittels einer Drehachsenverbindung (14) und eines Zylinders (11) verbunden ist, der zwischen der Bewehrung (2, 28, 29) und dem Gerüst (4) eingefügt ist, um das Kippen des Gerüstes in Bezug auf die Bewehrung um die Drehachse (14) zu betätigen.

2. Struktur nach Anspruch 1, **dadurch gekennzeichnet, dass** der Sitz (5) in Position in Bezug auf das Gerüst (4) einstellbar ist.

3. Struktur nach Anspruch 1 oder 2, **dadurch gekennzeichnet, dass** die Halterung (oder Halterungen) (6; 18) in Position in Bezug auf das Gerüst (4) einstellbar ist (sind).

4. Struktur nach Anspruch 3, **dadurch gekennzeichnet, dass** das Gerüst (4) wenigstens ein Führungsprofil (4a; 4b; 4c) umfasst, entlang welchem wenigstens eine Halterung (6; 18) verlagerbar ist.

5. Struktur nach Anspruch 3 oder 4, **dadurch gekennzeichnet, dass** jede Schnittstelle (10; 8) in Position in Bezug auf seine Halterung (6; 18) einstellbar ist.

6. Struktur nach einem der Ansprüche 1 bis 5, **dadurch gekennzeichnet, dass** sie ein Kopplungsorgan (12) umfasst, das zwischen dem Gerüst (4) und einer Schnittstelle Mensch/Maschine (9) angelenkt ist, die nicht von dem Gerüst getragen wird, welches es ermöglicht, die Orientierung der genannten Schnittstelle (9) an die Verlagerung des Gerüstes (4) zu koppeln.

7. Struktur nach Anspruch 6, **dadurch gekennzeichnet, dass** das Kopplungsorgan (12) sich in der Form eines Schwingarmes (12) darstellt, der zwischen einer Halterung (6; 18) für Steuerschnittstelle und der Schnittstelle Mensch/Maschine (9), die nicht von dem Gerüst getragen wird, eingefügt ist.

8. Struktur nach einem der Ansprüche 1 bis 7 und die dafür vorgesehen ist, unter einem Flügel (15) angeordnet zu werden, wobei die Struktur **dadurch gekennzeichnet ist, dass** das Gerüst (4) ein Mittel zum Öffnen / Schließen umfasst, das mit dem Flügel (15) zusammenwirkt, um ihn beim Anheben oder Absenken des Gerüstes (4) zu öffnen oder zu schließen.

9. Struktur nach Anspruch 8, **dadurch gekennzeichnet, dass** das Mittel zum Öffnen / Schließen sich in der Form von Rollen (13) darstellt, die vom Gerüst (4) gehalten werden und mit wenigstens einer Lagerleiste (25), die fest mit dem Flügel (15) verbunden ist, zusammenwirkt.

10. Struktur nach Anspruch 9, **dadurch gekennzeichnet, dass** sie ein Blockiermittel (23) umfasst, welches das Blockieren der Rolle (13) in Position ermöglicht, wenn der Flügel (15) sich in geöffneter Position befindet.

11. Struktur nach Anspruch 10, **dadurch gekennzeichnet, dass** sie ein System zur Trennung (24) umfasst, das die Trennung des Blockiermittels (23) und der Rolle (13) ermöglich, um das vollständige Öffnen des Flügels (15) zu ermöglichen.
